# EUROPEAN PATENT SPECIFICATION

(11) **EP 3 192 342 B1**
(45) Date of publication and mention of the grant of the patent: **02.10.2019**
(21) Application number: 16075012.1
(22) Date of filing: 12.05.2016
(51) Int. Cl.: A01B 39/18, A01B 39/19

(54) **WEED REMOVER APPARATUS**
UNKRAUTENTFERNERVORRICHTUNG
APPAREIL DE DÉSHERBAGE

(30) Priority: 02.06.2015 NL 1041331
(43) Date of publication of application: 19.07.2017
(73) Proprietor: Bernaerts, Sander Johannes, 5131 BC Alphen (NL)
(72) Inventor: BERNAERTS, Sander, Johannes, 5131 GC ALPHEN (NL)

(56) References cited:
- EP-A1- 0 660 995
- WO-A2-2008/135867
- CN-A- 102 792 943
- DE-A1- 4 411 080
- JP-U- H0 650 403
- KR-A- 20090 109 173
- US-A- 4 171 723
- US-A1- 2003 187 560
- US-A1- 2014 180 549
- US-A1- 2014 260 148

## Description

The invention concerns an apparatus for detecting and removing weed between growing-up agriculture or horticulture crops, where the detection of weed is carried out with the aid of detecting means and where removing weed takes place with mechanical means.

Background of the invention is the development of an apparatus for removing unwanted plants or weed between agriculture and horticulture crop. Removing unwanted plants or weed is still a problem or possibly a problem in the growing or cultivating agriculture and horticulture crop. Removing weed can be carried out manually, which is expensive and time consuming.

The use of chemical pesticides and herbicides is not allowed in biological cultivation and sometimes impossible or unwanted in the common horticulture in connection with contamination of crop, soil or (ground) water.

In practice horticulture crop is usually cultivated in rows or lanes. This cultivation can be carried out in a flat field, on ridges or on beds. The arrangement of rows including the trail and operation width of the agriculture tractor and machinery is called a cultivate system. The weed remover apparatus or machine has to be adapted to the cultivate system. Said apparatus can be adapted to different cultivate systems so the weeds can be weeded in various cultivate systems.

The apparatus of machine according to the invention is mainly applicable in the production of e.g. biological cultivated onions and carrots. This involves finely seeded crop, where the plants are mostly placed very closely to each other, the plants are very weak and where other forms of mechanical weeding or weed killing between crops are very difficult or impracticable. Furthermore the technology used has to be suitable for crops sown on fully covered fields. The range of the camera or cameras with weed removers must be such that the entire working width can be taken in one go. Examples of commonly used cultivate systems are:
- for carrot, chicory (French endive), parsnip and such, 4 rows with a track distance of 75 cm. Subsequently, the working width of the apparatus will be 3 metres. The agriculture tractor has a track width of approximately 1.50 metres or 3 metres;
- for sow onions and such, 3 beds with a width of 1.50 metres with on top of that 5 rows of onions per bed. The agriculture tractor has a track width of approximately 1.50 metres. Subsequently the machine can have a width of approximately 4.50 metres.

A rather similar machine or apparatus is known from the patent publication WO2008135867 (A2), filed: 2008-11-13 from applicant. Further apparatusses are known from the prior art in US 2014/180549 A1, US 2003/187560 A1, US 2014/260148 A1, DE 44 11 080 A1 and KR 2009 0109173 A. UNIVERSITY KOPENHAGEN, Denmark. Inventor GRIEPENTROP Hans-Werner.

This also concerns a precision weed machine for removing or destroying weeds between horticultural plants, which are placed in rows. Said machine or apparatus is processing soil with a rotating rake or teeth between the horticultural plants. The entire apparatus is provided with an electronic camera which is coupled to a control unit for controlling or activating said rake structure. The soil around the horticultural plants is heavily ploughed closely to the horticultural plants, which are mostly sown or placed at constant distances in advance.

The known apparatus or machine has a number of drawbacks especially in respect to horticultural plants placed at an irregular distance. This known technology cannot be used in horticulture, where the horticultural plants are places closely to each other. The rakes will undoubtedly destroy or damage the horticultural plants.

The aim of the present invention is to provide a modified and improved weed remover apparatus, which does not have the drawbacks as described and which apparatus can be put on the market in an economical way.

For this purpose an apparatus for detecting and removing weed between a growing-up horticulture according to claim 1.

The advantage is an apparatus which very accurately detects the weeds and subsequently removes these plants at the precise spot completely out of the soil and then the weed will dehydrate and die off on top of the soil.

Furthermore the apparatus according to the invention has been further developed in such a way, with the characteristic, that with the electronic camera images are made from the row horticultural plants with the weed in between, which can be selected manually or automatically albeit with the aid of a computer controlled display or touch screen.

The advantage is an apparatus, which works very effectively.

Furthermore the apparatus according to the invention is further developed in such a way, characterised in that said built-in remover unit for the weeds consists of vertical up and down moveable mechanism with a conical tubular digging element without bottom plate at the end.

The advantage is an effective and very accurately removing of the weeds between or next to the horticultural plants.

The invention is described further hereinafter, according to a preferred embodiment, by way of example only, with reference to the accompanying drawings, in which:
Figure 1 illustrates a side view of the weed remover apparatus with agriculture tractor in accordance with a preferred embodiment of the invention;
Figure 2 shows a schematic impression of the operation of the weed remover apparatus of figure 1;
Figure 3 shows a top view of the field divided in rows of horticultural plants (with possibly weeds) with the agriculture tractor equipped with the weed remover apparatus; and
Figure 4 shows a top view of a row with horticultural plants and weed in zone B and zone A next to the horticultural plants with mainly weed.

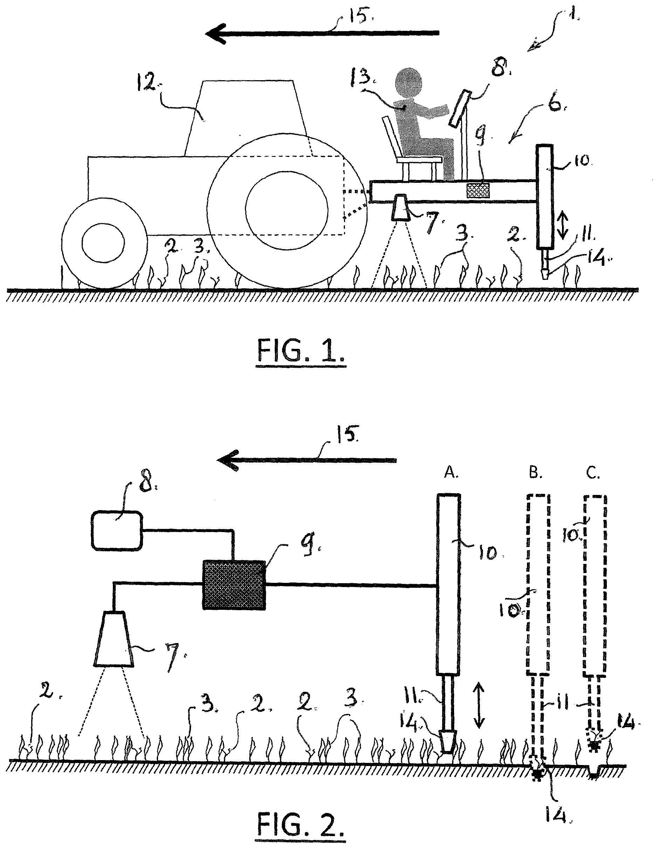

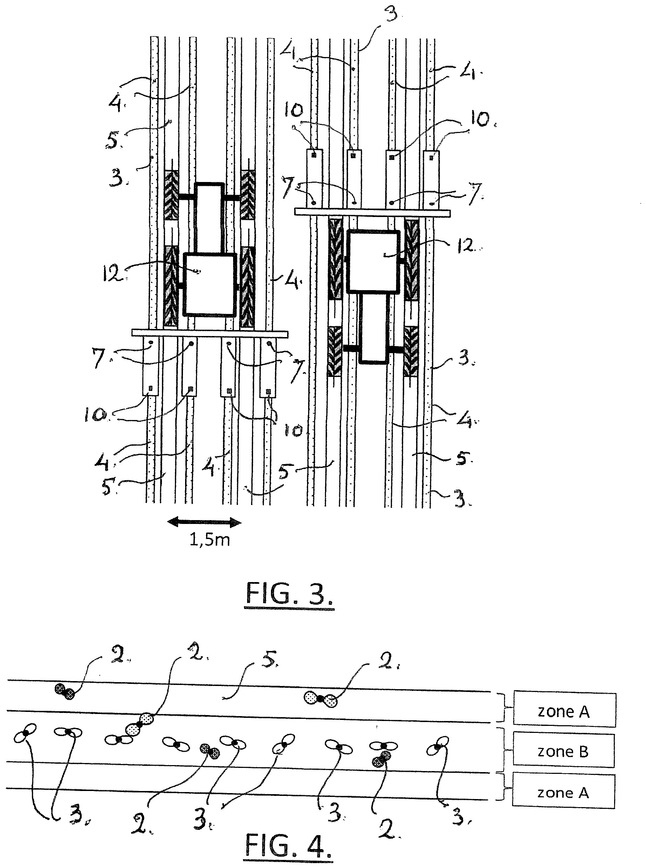

In figure 1 a side view is shown of the weed remover apparatus 1 for the detection and removal of weeds, which are situated between the horticultural plants 3. The horticultural plants 3 are mostly cultivated in rows 4 (see figure 3). Between the rows there are regular trails or pathways 5 for the wheels of the agriculture machines, e.g. the agriculture tractor 12, which moves in the driving direction 15. At said agriculture tractor 12 a weed remover apparatus 6 is mounted with the appliances needed for detection and removal of the weeds 2 between the actual horticultural plants 3. At the weed remover apparatus 6 (see figure 2, schematically) an electronic camera 7 is mounted, which detects the weeds 2, which colour, form and/or structure deviates from the horticultural plants 3 in order to select the weeds 2, that are to be removed manually or computer controlled. The horticultural plants 3, as are clearly shown in figure 4, are mostly cultivated in rows, as shown in figure 4 zones B. The weeds 2 can appear between the horticultural plants in zone B as well as next to the horticultural rows in zone A. The weeds in zone A can be selected automatically based on position. The image of the electronic camera goes via computer 9 to a display or touch screen 8. When operating the display or touch screen a labourer 13 can manually select the weeds 2. Because of this the remover unit 10 will go from position A into position B and dig out the weed 2 in position B, after which the remover unit 10 gets ready to dig out the next weed 2 in position C, as a result of which the weed 2 dug out earlier is pulled out from above and falls onto the soil for further dehydration. The remover unit 10 mainly consists of an up and down moveable tube or bar system 11 with a conically tubular formed digging element 14 without a bottom plate at the end.

In figure 3 an electronic camera 7 and at least one remover unit 10 is applied per row horticultural plants. It is also possible to accommodate the working width of the weed remover unit 6 of the agriculture tractor 12 to the specific growing system or to the capacity needed. The computer 9 and the display or touch screens 8 are similarly adapted.

Finally, it has to be emphasized that above a preferred embodiment of the invention has been described and that further modifications and such are possible without leaving the scope of this patent specification.

## Claims

1. Apparatus for detecting and removing weed plants between growing-up mainly horticulture crop, detection of weed plants between mentioned horticulture crop is carried out with an electronic camera coupled to a computer with specific software and a remover unit for carefully removing said weed plants wherein said apparatus (1) comprises an electronic camera (7) for taking images from the row horticultural plants (3) with the weed plants (2) between them ,which are selected manually or automatically albeit with the aid of said computer (9) controlled display or touch screen (8) and so a remover unit (10) for mentioned weed plants (2) is activated, which remover unit (10) includes a vertical up and down moveable tube or bar system (11) **characterized in that** the movable tube or bar system (11) further comprises a conically formed digging element (14) without a bottom plate at the end.

2. Apparatus according to claim 1, **wherein**, the the vertical up and down moveable mechanical tube and bar system (11) consists of in each other slideable electronic controlled cylinders and that above the bed width cultivated horticulture plants (3) the conically formed digging element (14)with a stiff handle structure is fixed at the end.

3. Apparatus according to claim 1-3, **wherein,** the vertical up and down movement of the remover unit (10) is made from an electronically controlled excentric structure which consist of a rotating disc with a hinged guide bar system fixed to it.

4. Apparatus according to claim 1, **wherein,** over or above the horticulture plants (3) and the weed plants (2) a moving weed remover apparatus (1) is coupled to an agriculture tractor (12), and if necessary the track with is increased mostly in steps according to the bed width of the cultivated plants.

5. Apparatus according to claim 1, **wherein,** mentioned moving forward weed remover apparatus (6) consist of an over or above the horticulture plants (3) moving platform structure.

## Patentansprüche

1. Apparat für das Detektieren und das Entfernen von Unkrautpflanzen zwischen aufwachsende in hauptsächlich Hortikultur Pflanzen, das Detektieren von Unkrautpflanzen zwischen genannte Hortikultur Pflanzen ist durchgeführt mit einer elektronischer Kamera, welche gekuppelt ist an einem Computer mit angegebenem Software und eine Entfernungseinheit oder ein Unit für sorgfältige Entfernung von genannten Unkrautpflanzen und daß genannter Apparat eine elektronische Kamera enthält für Bilder genommen von der Reihe Hortikultur Pflanzen (3) mit den Hortikultur Pflanzen dazwischen, welche handmäßig oder automatisch selektiert worden sind und mit Hilfe von genanntem Computer oder Rechner (9) gesteuertem Display oder Touch Screen (8) und so eine Entfernungseinheit (10) für genannte Unkrautpflanzen (2) aktiviert wird, welche Entfernungseinheit (10) ein vertikal hin und her bewegbares Rohr- oder Stabsystem (11) enthält, **dadurch gekennzeichnet daß** das bewegbare Rohr- oder Stabsystem (11) ein konisch gebildetes Aushebe- oder Grabelement (14) ohne Bodenplatte am Außenende enthält.

2. Apparat laut Anspruch 1, **dadurch gekennzeichnet daß** das vertikal hin und her bewegbares mechanisches Rohr- und Stabsystem (11) besteht aus ineinander verschiebbaren elektronisch gesteuerten Zylinder und daß über das Bett mit kultivierten Hortikultur Pflanzen (3) das konisch gebildete Grabelement (14) mit einer steifen Hebelstruktur an das Außenende festgesetzt worden ist.

3. Apparat laut Anspruch 1-2, **dadurch gekennzeichnet daß** das vertikal hin und her bewegen von der Entfernungseinheit (1) gefertigt ist von einer elektronisch gesteuerten exzentrischen Struktur, welche besteht aus einer rotierenden Disk mit einem daran festgemachtem gelenkigen Leibstabsystem.

4. Apparat laut Anspruch 1, **dadurch gekennzeichnet daß** das über oder oben die Hortikultur Pflanzen (3) und die Unkrautpflanzen (2) ein bewegbarer Unkrautentfernungsapparat (1) gekuppelt ist an einem Agrikulturtraktor (12) und falls nötig die Spurbreite meistens Schritt für Schritt vergrößern kann in Übereinstimmung mit der Bettbreite der kultivierten Pflanzen.

5. Apparat laut Anspruch 1, **dadurch gekennzeichnet daß** der genannte vorwärts bewegende Unkrautentfernungsapparat besteht aus einer über oder oben die Hortikultur Pflanzen (3) beweglichen Plattformstruktur.

## Revendications

1. Dispositif pour détecter et enlever des plantes mauvaise herbes entre grandissante sur plantes l'essentiel d'agriculture ou d'horticulture, la détection de plantes mauvaise herbes est exécuté avec une caméra électronique accouplé à un ordinateur avec software spécifique et une unité enlevé pour consciencieux enlever nommé plantes des mauvaise herbes, desquelles nommé dispositif (1) comprend une caméra électronique (7) pour fait des images d'une rangée de plantes d'horticultures (3) avec de plantes des mauvaise herbes (2) entre leurs, quels sont sélectés manuelles out automatiques avec l'aide d'ordinateur (9) avec un *controlled display* ou un *touch screen* (8) et ainsi une unité enlevée (10) pour nommé plantes des mauvaise herbes (2) est activé, quelle unité enlevée (10) comprends un vertical *up and down* tube mobile ou un système barre (11) **caractérisé en ce que** le tube mobile ou le système barre (11) comprend plus un élément de creuser formé conique (14) sans un fond plaque près la fin.

2. Dispositif support selon la revendication 1, **caractérisé en ce que** le vertical *up and down* mobile et le système barre (11) existent dans l'un et l'autre glissable cylindres électronique manouvre et ce de platebande au-dessus avec des plantes horticultures cultivé (3) l'élément de creuses (14) formé conique avec un structure rigide mande près de fin.

3. Dispositif support selon la revendication 1-2, **caractérisé en ce que** le vertical mouvement *up and down* d'unité enlevée (10) est fabriquée d'un excentrique structure électronique manouvre, quel existe d'un disc rotation avec un présent pivoté transmis système barre.

4. Dispositif support selon la revendication 1, **caractérisé en ce qu'**au-dessus de plantes horticultures (3) et pour les plantes de mauvaise herbes (2) un mobile dispositif pour enlever (1) est couplé d'un tracteur agriculture (12), et si est nécessaire le track est le plus amélioré en pas analogue le meilleur avec la platebande des plantes cultivés.

5. Dispositif support selon la revendication 1, **caractérisé en ce que** nommé en avant mouvement le dispositif d'enlever les plantes des mauvaise herbes (6) est un dispositif sur et au-dessus des plantes horticulture (3) possédé une platform structure.
